# EUROPEAN PATENT SPECIFICATION

(11) **EP 1 282 971 B1**
(45) Date of publication and mention of the grant of the patent: **04.10.2006**
(21) Application number: 01916045.6
(22) Date of filing: 28.03.2001
(51) Int. Cl.: H04L 29/06, G06F 13/00

(54) **LENDING OF LOCAL RESOURCE IN A TELECOMMUNICATION AND DATA COMMUNICATION SYSTEM**
LEIHEN EINES LOKALEN BETRIEBSMITTELS IN EINEM TELEKOMMUNIKATIONS- UND DATENKOMMUNIKATIONSSYSTEM
PRET DE RESSOURCE LOCALE DANS UN SYSTEME DE COMMUNICATION DE DONNEES ET DE TELECOMMUNICATION

(30) Priority: 07.04.2000 SE 0001315
(43) Date of publication of application: 12.02.2003
(73) Proprietor: TELIA AB, 123 86 Farsta (SE)
(72) Inventor: HOROWITZ, Bruce, S-149 41 Nynäshamn (SE); ERIKSSON, Lars, S-149 51 Nynäshamn (SE); ALGULIN, Ulrik, S-142 42 Skogas (SE); LINDBERG, Eva, S-149 45 Nynäshamn (SE); MAGNUSSON, Nils-Göran, S-149 45 Nynäshamn (SE); STENBERG, Camilla, S-149 30 Nynäshamn (SE); ALM, Karna, S-149 43 Nynäshamn (SE)
(74) Representative: Hopfgarten, Nils
(86) International application number: PCT/SE2001/000673
(87) International publication number: WO 2001/078352

(56) References cited:
- EP-A1- 0 681 233
- WO-A1-00/02202
- WO-A1-00/28398
- WO-A1-00/39733
- US-A- 5 959 945
- KEN ARNOLD: 'The JiniMTArchitecture: Dynamic services in a flexible network' DESIGN AUTOMATION CONFERENCE 1999, pages 157 - 162, XP010344000
- IAN GOLDBERG ET AL.: 'The ninja jukebox' THE UNIVERSITY OF CALIFORNIA AT BERKELEY, [Online] October 1999, page 1, XP002948003 Retrieved from the Internet: <URL:http://ninja.cs.berkeley.edu>

## Description

The present invention relates to a procedure to, at a telecommunication and data communication system, temporarily lend local resource in said system to service and/or goods/products supplier for delivery of service or goods/products, and to a telecommunication and data communication including such local resources, and set up equipment for temporary connection of local resource to service or goods/products supplier.

A lot of goods and services which today are distributed in traditional way via shops or per mail to the customer, should be possible to distribute via the telecommunication networks in form of IP-flows, provided that the customer has access to suitable infrastructure. Purchase of certain goods and services over telecommunication and data communication networks, such as Internet, in form of downloading and storing of music to the home or certain distribution points are however known. Thus are described in US,A, 5 900 608 equipment for downloading from, for instance, Internet of music and storing in the home on MD-disk. In US,A, 5 592 511 is dealt with distribution of audio products to a remote place, which can be a disk/record shop where the audio products can be stored on, for instance, CD-ROM or audio band (DAT). Further is described in US,A, 5 959 945 a system for distribution of music to a plurality of juke boxes.

With today known technology it is difficult to let anybody on the other side of a firewall have access to local resources in a communication network to a limited extent and with maintained level of security. It is also difficult to manage and for that reason does not scale well.

The aim of the present invention is to show a new technology to distribute goods and services to customers, in primarily households.

This aim is achieved by a procedure and a system of the in the introduction shown kind, with in the patent claim 1 and 2 shown characteristics.

By the procedure and the system according to the invention, temporary lending of one in the system arranged local resource is consequently made possible to a service or goods/product supplier for allocation of the local resource by utilization of a Jini-based platform. The according to the invention suggested solution, based on Jini, scales excellently and is easy to manage both to user and supplier, and the procedure and the system according to the invention is based on known, standardized technology. KEN ARNOLD describes the general Jini architecture in "The Jini^{™} Architecture: Dynamic services in a Flexible Network", Design Automation conference, 1999. A big advantage to the supplier at the technology according to the invention is that he/she does not need to give the customer access to the existing digital information, but the customer will only have the final result in his/her hand, which makes it easier for the supplier to protect himself/herself against pirate copying. The invention has its major field of use within so called electronic commerce, i.e. commerce with goods and services over the Internet, and by the improved possibilities that the invention provides in this respect, it will be of great advantage to suppliers, customers and the environment by the distribution links at traditional commerce being eliminated.

According to advantageous embodiments of the system according to the invention, intended to, to the user, provide product or service, which customer has for communication with supplier suitable infrastructure, said local resource includes a unit to, by means of by the supplier, as response to an order from the customer, electronically transmitted information, realize said product or service. This unit can include a "Jinified" recording device for production of ordered product by recording on a recording medium according to from supplier transmitted information. The "Jinified" recording device can include a Jini-capable CD recorder (writer) for recording (writing) of by the customer ordered CD/recorded media according to by the supplier of CD:s/records transmitted information. Said unit alternatively can include a Jinified printer, to which supplier of graphical products can be connected for transmission of information for production of by the customer ordered graphical product. The customer consequently in this way gives for instance a company for recorded CD-media access to the interface of his/her CD recorder (writer), so that the CD-company can write/record the CD the customer has ordered. When the disk is completed, the company for recorded CD-media no longer has access to the CD recorder (writer). It consequently will be possible for the supplier to locally, home at the customer's, produce the ordered product, at the customer's own unit, in the present case a CD recorder (writer). In corresponding way other products, for instance printed matter, can be produced at home at the customer's on his/her printer.

In order to explain the invention in more details, now an as an example selected embodiment of the invention will be described in details with reference to enclosed drawing.

On enclosed drawing the invention is exemplified by an embodiment including purchase of music.

A supplier, 2, for instance a music-CD company, is in normal way connected to Internet 4. Other suppliers are illustrated at 6 and 8. A customer is, via suitable infrastructure, for instance in form of a broadband connection 12 with a Jinified service platform, symbolically illustrated at 14, which also can be connected to Internet. Alternatively, the customer's infrastructure can include an access network with Jinified service platform. Jini is a new Java-based technology for distributed service provision. The software, which controls the infrastructure and which constitutes the platform 14, is based on an international standardized technology.

At the illustrated example of embodiment the customer orders music from the supplier 2, at which he/she will have access to the at the customer's arranged interface 16 of the Jini-compatible CD-recorder (writer) 10, so that the CD-music supplier 2, via the network 4, can transmit necessary digital information, in form of IP-flows, directly to said recorder (writer) 10, which is arranged to, according to received information, produce the CD the customer has bought from the supplier 2. When the CD is completed, the connection is disconnected and the CD-music supplier 2 no longer has access to the customer's CD recorder (writer) 10.

One advantage to the supplier is that he/she need not give the customer access to the transmitted digital information, which makes it easier to the supplier to protect himself/herself against pirate copying.

Above, one example of embodiment has been described for provision of a CD. Other suitable storing media stored with wanted music can of course be produced in similar way. Further, for example graphical or printed matter of course can be produced in similar way by use of a corresponding Jiri-compatible printer located at the customer's. The recorder, printer etc can of course alternatively be located in, for instance, a shop, at retailer's or the like.

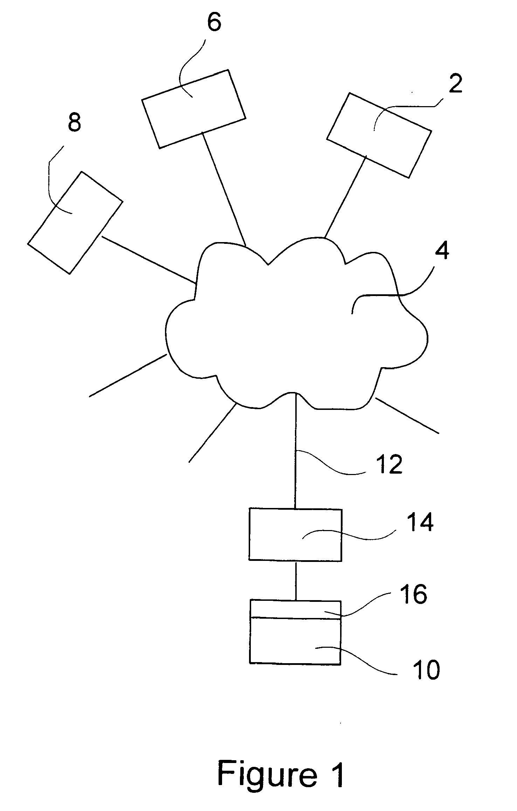

## Claims

1. Procedure, at a telecommunication and data communication system, to temporary lend local resource at a customer in said system to service or goods/product supplier for delivery of service or product, and the allocation of the local resource is made by utilizing a Jini-based platform, **characterized in that**, as response to order from customer, the supplier is allowed access to the local resource at the customer's, by means of which the product or service is realized, in one specimen, according to information transmitted from the supplier over said telecommunication and data communication system, after the realization of the specimen the connection between supplier and the customer's local resource is disconnected.

2. Telecommunication and data communication system including local resources and equipment for establishing temporary connection of a local resource at a customer, to service or goods/product supplier for transmission of information from supplier to said local resource, which is arranged to, according to said transmitted information, produce a product or service, **characterized in that** the call set up equipment includes a Jinified platform, intended to supply customer with product or service, which customer has for communication with the supplier suitable infrastructure, the local resource is lent to the supplier by the Jini based platform, such that access from the supplier to the local resource is allowed **characterized in that** said local resource includes a unit to, by means of from the supplier, as response to order from the customer, electronically transmitted information realize said product or service in one specimen.

3. System as claimed in patent claim 2,
**characterized in that** said call set up equipment includes a broadband call set up/connection for the customer.

4. System as claimed in patent claim 2 or 3,
**characterized in that** the call set up equipment includes an access network for the customer.

5. System as claimed in any of the patent claims 2-4,
**characterized in that** said unit includes a Jinified recording device for production of ordered product by recording on recording medium according to from supplier transmitted information.

6. System as claimed in patent claim 5,
**characterized in that** said Jinified recording device includes a Jini-capable CD recorder (writer) for writing/recording of by the customer ordered disk/CD according to from supplier of disk/recording transmitted information.

7. System as claimed in any of the patent claims 2-4,
**characterized in that** said unit includes a Jinified printer, to which supplier of graphical products can be connected for transmission of information for production of by the customer ordered graphical product.

8. System as claimed in any of the patent claims 2-7,
**characterized in that** the system is Internet. platform (14) .

## Patentansprüche

1. Verfahren bei einem Telekommunikations" und Datenkommunikationssystem, zeitweilig lokale Ressource bei einem Kunden in dem System einem Dienst- oder Waren/Produktlieferanten für die Lieferung von Dienst oder Produkt auszuleihen, wobei die Zuordnung der lokalen Ressource unter Verwendung einer auf Jini beruhenden Plattform durchgeführt wird, **dadurch gekennzeichnet, dass** als Reaktion auf eine Anweisung oder Bestellung vom Kunden dem Lieferanten Zugang zu der lokalen Ressource beim Kunden erlaubt ist, mit der das Produkt oder der Dienst in einem Exemplar gemäß Information realisiert wird, die vom Lieferanten über das Telekommunikations- und Datenkommunikationssystem übertragen wird, dass nach der Realisierung des Exemplars die Verbindung zwischen Lieferanten und der lokalen Ressource des Kundens getrennt wird.

2. Telekommunikations- und Datenkommunikationssystem, das lokale Ressourcen und Ausrüstung zum Einrichten von zeitweiliger Verbindung einer lokalen Ressource bei einem Kunden mit einem Dienst- oder Waren/Produktlieferanten zum Übertragen von Information vom Lieferanten zur lokalen Ressource einschließt, die dazu ausgebildet ist, entsprechend der übertragenen Information ein Produkt oder einen Dienst zu erzeugen, **dadurch gekennzeichnet, dass** die Rufeinrichtungsausrüstung eine für Jini eingerichtete (Jinified) Plattform aufweist, die dazu bestimmt ist, den Kunden mit Produkt oder Dienst zu versorgen, welcher Kunde für Kommunikation mit dem Lieferanten eine geeignete Infrastruktur hat, dass die Ressource dem Lieferanten durch die auf Jini beruhende Plattform ausgeliehen wird, so dass Zugang vom Lieferanten zur lokalen Ressource erlaubt ist, **dadurch gekennzeichnet, dass** die lokale Ressource eine Einheit einschließt, um mit Hilfe vom Lieferanten als Reaktion auf Befehl oder die Bestellung vom Kunden elektronisch übertragene Information das Produkt oder der Dienst in einem Exemplar zu realisieren.

3. System nach Patentanspruch 2, **dadurch gekennzeichnet, dass** die Rufeinrichtungsausrüstung eine Breitbandrufeinrichtung/Verbindung für den Kunden einschließt.

4. System nach Patentanspruch 2 oder 3, **dadurch gekennzeichnet, dass** die Rufeinrichtungsausrüstung ein Zugangsnetz für den Kunden einschließt.

5. System nach einem der Patentansprüche 2 bis 4, **dadurch gekennzeichnet, dass** die Einheit eine für Jini eingerichtete (Jinified) Aufzeichnungseinrichtung zum Erzeugen des bestellten Produkts durch Aufzeichnen auf Aufzeichnungsmedium gemäß von dem Lieferanten übertragener Information einschließt.

6. System nach Patentanspruch 5, **dadurch gekennzeichnet, dass** die für Jini eingerichtete Aufzeichnungseinrichtung ein zu Jini fähiges CD-Aufzeichnungsgerät (Schreiber) zum Schreiben/Aufzeichnen von durch den Kunden bestellter Disk/CD gemäß vom Lieferanten der Disk/Aufzeichnung übertragener Information einschließt.

7. System nach einem der Patentansprüche 2 bis 4, **dadurch gekennzeichnet, dass** die Einheit einen für Jini eingerichteten Drucker einschließt, mit dem ein Lieferant graphischer Erzeugnisse für Übertragen von Information für Erzeugung von einem graphischen Produkt, das durch den Kunden bestellt ist, verbunden werden kann.

8. System nach einem der Patentansprüche 2 bis 7, **dadurch gekennzeichnet, dass** das System eine Internetplattform (14) ist.

## Revendications

1. Procédure, destinée à un système de télécommunication et de communication de données, pour prêter temporairement une ressource locale chez un client dans ledit système à un fournisseur de service ou de biens ou produit afin de livrer un service ou un produit, et l'allocation de la ressource locale est faite par l'utilisation d'une plateforme basée sur Jini, **caractérisée en ce que**, en réponse à une commande d'un client, le fournisseur a l'autorisation d'accéder à la ressource locale chez le client, au moyen de laquelle le produit ou service est réalisé, en un spécimen, selon les informations transmises par le fournisseur sur ledit système de télécommunication et de communication de données, après la réalisation du spécimen, la connexion entre le fournisseur et la ressource locale du client est déconnectée.

2. Système de télécommunication et de communication de données comprenant des ressources locales et un équipement destiné à établir une connexion temporaire d'une ressource locale chez un client, à un fournisseur de service ou de biens ou produit afin de transmettre des informations en provenance du fournisseur vers ladite ressource locale, qui est organisée pour, selon lesdites informations transmises, produire un produit ou service, **caractérisé en ce que** l'équipement d'établissement d'une communication comprend une plateforme jinifiée, destinée à fournir au client un produit ou service, que le client détient pour la communication avec l'infrastructure appropriée du fournisseur, la ressource locale est prêtée au fournisseur par la plateforme basée sur Jini, tel que l'accès du fournisseur à la ressource locale est autorisé, **caractérisé en ce que** ladite ressource locale comprend une unité au moyen de laquelle, en provenance du fournisseur, en réponse à une commande du client, les informations transmises électroniquement réalisent ledit produit ou service en un spécimen.

3. Système selon la revendication 2, **caractérisé en ce que** ledit équipement d'établissement d'une communication comprend un établissement d'une communication ou connexion à large bande pour le client.

4. Système selon la revendication du brevet 2 ou 3, **caractérisé en ce que** l'équipement d'établissement d'une communication comprend une boucle locale pour le client.

5. Système selon l'une quelconque des revendications 2 à 4, **caractérisé en ce que** ladite unité comprend un dispositif d'enregistrement jinifié destiné à la production du produit commandé en enregistrant sur un support d'enregistrement selon les informations transmises par le fournisseur.

6. Système selon la revendication 5, **caractérisé en ce que** ledit dispositif d'enregistrement jinifié comprend un graveur de CD pouvant s'adapter à Jini (scripteur) destiné à écrire ou enregistrer sur le disque ou CD commandé par le client selon les informations transmises par le fournisseur du disque ou de l'enregistrement.

7. Système selon l'une quelconque des revendications 2 à 4, **caractérisé en ce que** ladite unité comprend une imprimante jinifiée, à laquelle le fournisseur de produits graphiques peut être connecté destinée à la transmission d'informations pour une production du produit graphique commandé par le client.

8. Système selon l'une quelconque des revendications 2 à 7, **caractérisé en ce que** le système est une plateforme internet (14).
